# EUROPEAN PATENT APPLICATION

(11) **EP 4 708 465 A1**
(43) Date of publication of application: **11.03.2026**
(21) Application number: 24939077.4
(22) Date of filing: 23.12.2024
(51) Int. Cl.: H01M 10/658

(54) **BATTERY MODULE, BATTERY PACK AND VEHICLE**

(30) Priority: 19.06.2024 KR 20240079832
(71) Applicant: LG ENERGY SOLUTION, LTD., Seoul 07335 (KR)
(72) Inventor: YUN, Hyun-Seop, Daejeon 34122 (KR); YUN, Su-Min, Daejeon 34122 (KR); JUNG, Hye-Mi, Daejeon 34122 (KR)
(74) Representative: Plasseraud IP
(86) International application number: PCT/KR2024/020964
(87) International publication number: WO 2025/263712

(57) **Abstract**

Disclosed are a battery module, a battery pack, and a vehicle. The battery module includes a plurality of battery cells; a module case in which the plurality of battery cells are accommodated; and a flame suppression pad disposed between the plurality of battery cells inside the module case, and the flame suppression pad is coated with an insulating member or contains an insulating member therein.

## Description

### TECHNICAL FIELD

This application is based on and claims priority from Korean Patent Application No. 10-2024-0079832, filed on June 19, 2024, with the Korean Intellectual Property Office, the disclosure of which is incorporated herein in its entirety by reference.

The present disclosure relates to a battery module, a battery pack, and a vehicle and, more particularly, to a battery module, a battery pack, and a vehicle capable of preventing the propagation of flames.

### BACKGROUND ART

In general, secondary batteries refer to batteries capable of being repeatedly charged and discharged, such as lithium-ion batteries, lithium-polymer batteries, nickelcadmium batteries, nickel-hydrogen batteries, nickel-zinc batteries, and the like. A battery cell, which is the most fundamental secondary battery, may provide an output voltage of approximately 2.5V to 4.2V.

Recently, the secondary batteries have been applied to devices that require high output voltage and a large amount of charging capacity, such as electric vehicles or ESSs (Energy Storage Systems), and accordingly, a battery pack, which is manufactured by configuring a battery module by connecting a plurality of battery cells in series, parallel, or a combination thereof and reconnecting these battery modules in series, parallel, or a combination thereof, has been widely used.

Although lithium secondary batteries are currently in the spotlight due to their advantages such as high operating voltage and significantly high energy density, since they use organic electrolytes, if the lithium secondary batteries are overcharged, it may cause overcurrent and overheating, leading to explosion or fire in the worst cases.

Conventional battery modules may have a compression pad disposed between a battery cell and a neighboring battery cell, which are stored inside the battery module. However, since the compression pad of the prior art is burned by flame when a thermal event occurs inside the battery module, the flame may spread to other battery cells disposed adjacently.

In addition, if the flame or gas spreads to another battery cell or another battery module, a thermal runaway phenomenon may occur, and if the flame leaks to the outside due to the thermal runaway phenomenon, there is a problem that the driver of the electric vehicle may be burned or put in a dangerous situation.

In addition, the battery module or battery pack may be damaged or burned down due to a chain reaction of flames caused by flame propagation, making it impossible to secure the stability of the battery module or battery pack.

### DISCLOSURE

### Technical Problem

The present disclosure is directed to providing a battery module, a battery pack, and a vehicle, which may prevent a flame generated in one battery cell from spreading to another neighboring battery cell or battery module.

In addition, the present disclosure is to provide a battery module, a battery pack, and a vehicle capable of preventing thermal runaway by preventing a chain reaction of flames due to flame propagation.

In addition, the present disclosure is to provide a battery module, a battery pack, and a vehicle capable of discharging flame in a preset direction.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery module comprising: a plurality of battery cells; a module case in which the plurality of battery cells are accommodated; and a flame suppression pad disposed between the plurality of battery cells inside the module case, wherein the flame suppression pad is coated with an insulating member or contains an insulating member therein.

In an embodiment, the insulating member may contain an air layer or moisture and may be inserted into the flame suppression pad.

In an embodiment, the insulating member may be manufactured in a circular or polygonal shape and inserted into the flame suppression pad.

In an embodiment, the insulating member may be provided in plurality, and the plurality of insulating members may be distributed throughout an entire inside of the flame suppression pad.

In an embodiment, the plurality of insulating members may be arranged to be distributed at a preset interval.

In an embodiment, the insulating member may be made of yellow clay.

In an embodiment, the insulating member may be a yellow clay ball made into a ball shape by the yellow clay and inserted into the flame suppression pad.

In an embodiment, the yellow clay ball may be made to contain an air layer and moisture together therein.

In an embodiment, the flame suppression pad may have a surface including a yellow clay coating portion coated with the yellow clay.

In an embodiment, the insulating member may be made of vermiculite.

In an embodiment, the flame suppression pad may have a surface coated with vermiculite.

In an embodiment, the insulating member may include a yellow clay plate coated with fire-resistant paint.

In an embodiment, the yellow clay plate may be provided in plurality, and the plurality of yellow clay plates may be arranged vertically inside the flame suppression pad.

In another aspect of the present disclosure, there is provided a battery pack including the battery module described above, and there is provided a vehicle including the battery module described above.

Meanwhile, in another aspect of the present disclosure, there is provided a battery pack including: a plurality of battery cells; a pack case in which the plurality of battery cells are accommodated; and a flame suppression pad disposed between the plurality of battery cells inside the pack case, wherein the flame suppression pad is coated with an insulating member or contains an insulating member therein, and there is also provided a vehicle comprising the battery pack.

### Advantageous Effects

The embodiments of the present disclosure have the effect of preventing a flame generated in one battery cell from spreading to another neighboring battery cell or battery module.

In addition, the present disclosure has the effect of preventing the thermal runaway phenomenon by preventing the chain reaction of flame due to flame propagation.

In addition, the present disclosure has the effect of discharging flames in a preset direction.

However, the effects obtainable from the present disclosure are not limited to the above-mentioned effects, and other effects not mentioned above will be clearly understood by those skilled in the art from the description of the invention described below.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view schematically illustrating a battery module according to an embodiment of the present disclosure.
FIG. 2 is a cross-sectional view taken along line A-A' of FIG. 1.
FIG. 3 is an enlarged view of a part B of FIG. 2.
FIG. 4 is a first modified embodiment for FIG. 3.
FIG. 5 is a second modified embodiment for FIG. 3.
FIG. 6 is a third modified embodiment for FIG. 3.
FIG. 7 is a fourth modified embodiment for FIG. 3.
FIG. 8 is a diagram schematically illustrating the configuration of a battery pack including a battery module according to each embodiment of the present disclosure.
FIG. 9 is a diagram illustrating a vehicle including the battery pack in FIG. 8.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

The sizes of respective elements or specific parts of each element shown in the attached drawings are exaggerated, omitted, or simplified for convenience of explanation and clarification thereof. Accordingly, the sizes of respective elements do not entirely reflect their actual sizes. Descriptions of related known functions or configurations, which may obscure the subject matter of the present disclosure, will be omitted.

In addition, the expression "an element is 'connected' or 'coupled' to another element" should be understood that the elements may be directly connected or coupled to each other and that the elements may be indirectly connected or coupled to each other through a connecting member therebetween.

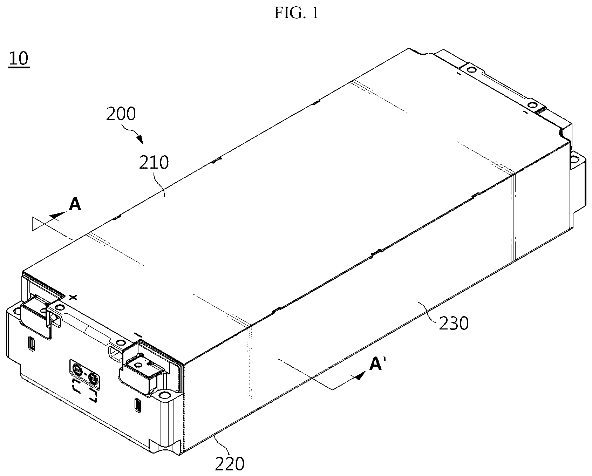

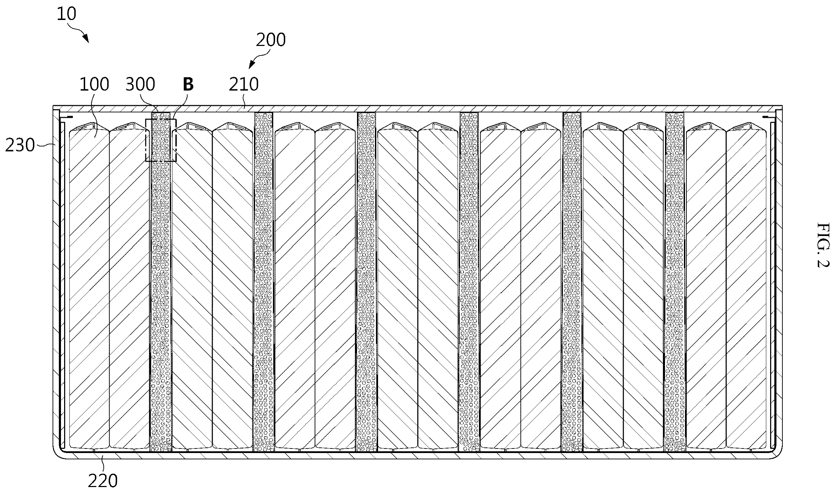

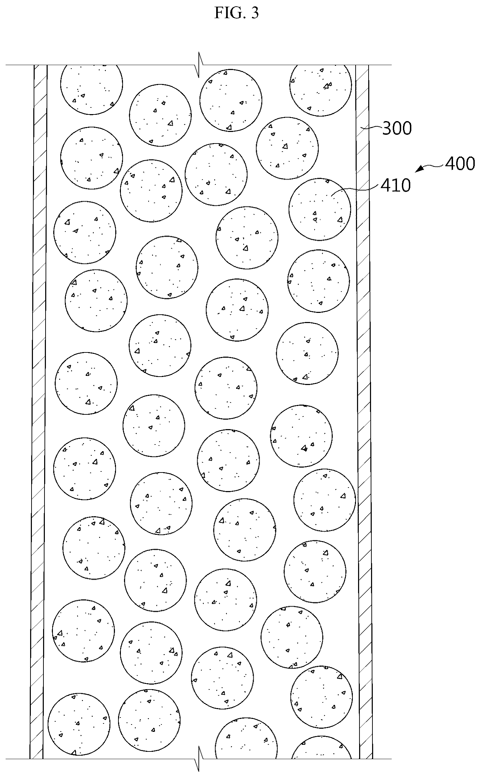

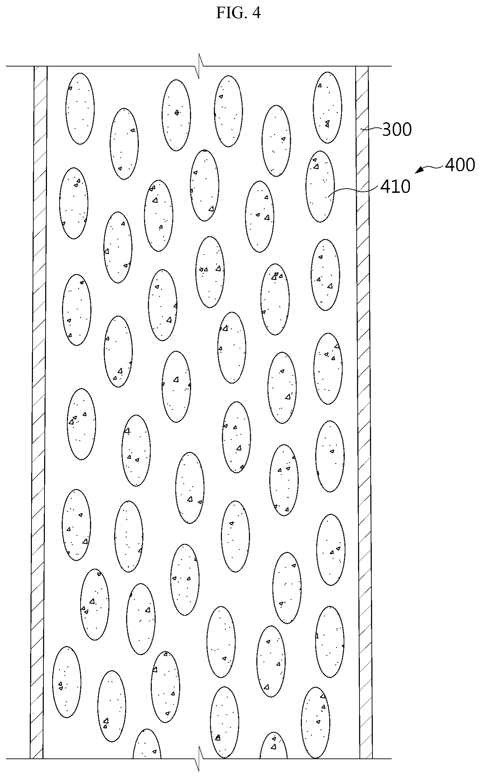

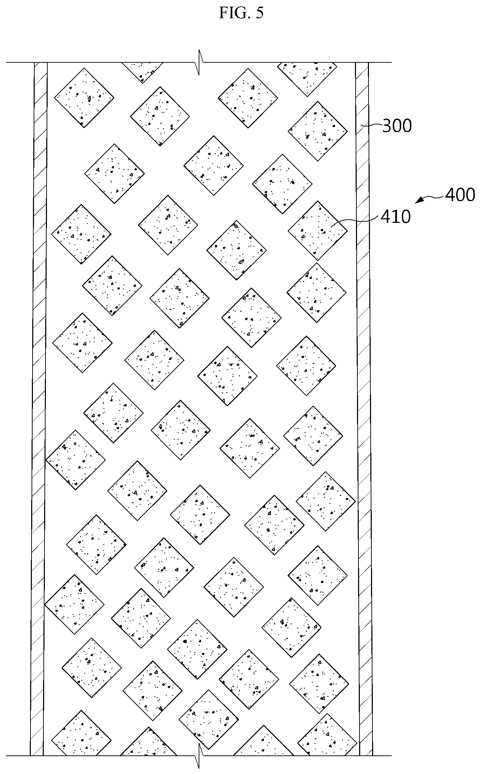

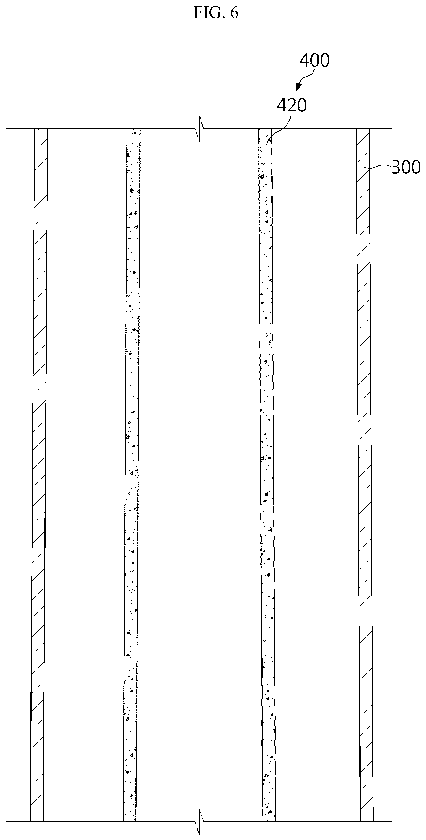

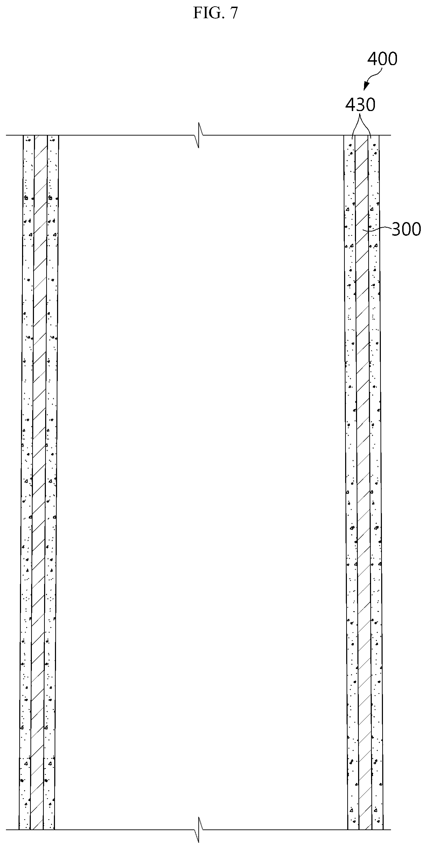

FIG. 1 is a perspective view schematically illustrating a battery module according to an embodiment of the present disclosure, FIG. 2 is a cross-sectional view taken along line A-A' of FIG. 1, FIG. 3 is an enlarged view of a part B of FIG. 2, FIG. 4 is a first modified embodiment for FIG. 3, FIG. 5 is a second modified embodiment for FIG. 3, FIG. 6 is a third modified embodiment for FIG. 3, and FIG. 7 is a fourth modified embodiment for FIG. 3.

Referring to FIGS. 1 and 2, a battery module 10 according to an embodiment of the present disclosure includes a plurality of battery cells 100, a module case 200, and a flame suppression pad 300.

Various types of battery cells 100 may be provided. For example, the battery cells 100 may include at least one of a pouch-type battery cell, a cylindrical battery cell, and a prismatic battery cell. However, for convenience of explanation, the following description will be made based on the case where the battery cell 100 is a pouch-type battery cell.

The plurality of battery cells 100 may be stacked on each other. The battery cells 100 may have various structures, and the plurality of battery cells 100 may be stacked in various ways.

The battery cell 110 may have a structure in which a plurality of unit cells, configured as positive electrode plate-separator-negative electrode plate sequentially laminated, or a plurality of bi-cells, configured as positive electrode plate-separator-negative electrode plate-separator-positive electrode plate-separator-negative electrode plate sequentially laminated, are stacked depending on the battery capacity.

The battery cell 110 may be provided with an electrode lead. The electrode lead is a kind of terminal exposed to the outside and connected to an external device, and may be made of a conductive material. The electrode lead may include a positive electrode lead and a negative electrode lead.

The positive electrode lead and the negative electrode lead may be disposed in opposite directions along the longitudinal direction of the battery cell 110, or the positive electrode lead and the negative electrode lead may be positioned in the same direction along the longitudinal direction of the battery cell 110.

Meanwhile, for example, the battery cells 100 may be accommodated in a module case 200, and the module case 200 accommodating the battery cells 100 may be stored in a pack case 21 to form a battery pack 20.

However, the disclosure is not limited thereto, and the module case 200 may be removed to reduce the weight and volume of the module case 200, and in this case, the battery cells 100 may be directly stored in the pack case 21 of the battery pack 20. According to this type, the battery cells 100 may be further stored in the space occupied by the module case 200 of the battery module 10 inside the battery pack 20, thereby increasing space efficiency and improving battery capacity.

However, for the convenience of explanation, the following description will be made based on the case in which the module case 200 accommodating the battery cells 100 is provided. That is, an embodiment in which a battery module 10 is stored in a battery pack 20 will be described below. Also, an example in which the battery cells 100 are directly accommodated in the pack case 21 of the battery pack 20 is described later.

A plurality of battery cells 100 are stored in a module case 200. Here, as described above, the plurality of battery cells 100 may be stacked in the form of a stack of battery cells and then be stored in the module case 200. In addition, the module case 200 surrounds the plurality of battery cells 100 to protect the battery cells 100 from external vibration or impact.

For example, the module case 200 may include an upper module case 210, a lower module case 220, and a side module case 230. In addition, the module case 200 surrounds the battery cells 100 to protect the battery cells 100 from external vibration or impact.

The module case 200 may include a mica plate formed of mica having insulation and heat resistance to prevent flame leakage. Here, the mica plate may include not only a flat mica plate but also a mica plate having the shape of a mixture of a flat surface and a curved surface.

The module case 200 may be formed in a shape corresponding to the shape of the stack of battery cells. For example, if the stack of battery cells is formed in a hexahedron with a rectangular cross-section, the module case 200 may also be formed in a hexahedron corresponding thereto.

The module case 200 may be manufactured by, for example, bending a metal plate, so that the module case 200 may be formed in an integral form. If the module case 200 is manufactured in an integral form, the coupling process may be simplified. Alternatively, the module case 200 may be configured as separate parts and then coupled to each other by welding or the like. However, the material of the module case 200 is not limited to metal.

If the module case 200 is formed in an integrated form or coupled by welding, adhesive is unnecessary, so that even if the temperature inside the battery module 10 rises, the upper module case 210 may not be separated from the side module case 230, thereby preventing flames, gases, or high-temperature particles from being released in an undesirable direction at once.

Referring to FIG. 2, the flame suppression pad 300 is disposed between the plurality of battery cells 100 inside the module case 200. Here, the flame suppression pad 300 may be coated with an insulating member 400, or the insulating member 400 may be included inside the flame suppression pad 300. This will be described in detail below.

Referring to FIGS. 2 and 3, when the insulating member 400 is included within the flame suppression pad 300, the insulating member 400 may be configured to contain an air layer or moisture. For example, the insulating member 400 may be formed to contain an air layer or moisture during the process of manufacturing the insulating member 400, or the insulating member 400 may be manufactured using a material containing an air layer or moisture.

In addition, the insulating member 400 is inserted into the flame suppression pad 300 while containing an air layer or moisture. If the insulating member 400 is inserted into the flame suppression pad 300, when a flame occurs in any one of the battery cells 100, the propagation of the flame may be prevented by the insulating member 400 containing an air layer or moisture.

The insulating member 400 may be formed in various shapes. For example, as shown in FIG. 3, the insulating member 400 may be formed in a circular shape and inserted into the flame suppression pad 300. Alternatively, as shown in FIG. 4, the insulating member 400 may be formed in an oval shape and inserted into the flame suppression pad 300.

Alternatively, the insulating member 400 may be formed in a polygonal shape and inserted into the flame suppression pad 300. Referring to FIG. 5, the insulating member 400 may be formed in a rectangular (diamond) shape, but is not limited thereto, and the shape of the insulating member 400 may be more diverse.

Referring to FIGS. 2 and 3, the insulating member 400 may be provided in plurality, and the plurality of insulating members 400 may be distributed throughout the entire inside of the flame suppression pad 300. In this case, the plurality of insulating members 400 may be distributed randomly, or may be distributed according to a preset pattern. For example, the plurality of insulating members 400 may be arranged to be distributed at a preset interval.

The insulating member 400 may be made of various materials, and, for example, may be made of yellow clay. Alternatively, the insulating member 400 may be made of vermiculite having a crystal structure similar to mica. However, the material of the insulating member 400 is not limited thereto.

The insulating member 400 may be formed in a ball shape. For example, if the material of the insulating member 400 is yellow clay, a yellow clay ball 410 may be inserted into the flame suppression pad 300. Alternatively, if the material of the insulating member 400 is vermiculite, a vermiculite ball may be inserted into the flame suppression pad 300.

Here, the yellow clay ball 410 or the vermiculite ball may be manufactured to contain an air layer and moisture therein, and the propagation of a flame generated from the battery cell 100 may be prevented by the air layer and moisture contained in the yellow clay ball 410 or the vermiculite ball.

Referring to FIG. 6, the insulating member 400 may include a yellow clay plate 420 coated with a fire-resistant paint. Here, the yellow clay plate 420 may be provided in plurality, and the plurality of yellow clay plates 420 may be arranged vertically inside the flame suppression pad 300. The number of yellow clay plates 420 may vary, and the arrangement form of the yellow clay plates 420 may also vary.

In addition, the fire-resistant yellow clay plate 420 has the effect of preventing the spread of flame.

Referring to FIG. 7, the surface of the flame suppression pad 300 may include a yellow clay coating portion 430 coated with yellow clay. For example, as in FIG. 7, the yellow clay coating portion 430 may be formed on the entire outer surface and inner surface of the flame suppression pad 300. Alternatively, the yellow clay coating portion 430 may be formed only on the outer surface of the flame suppression pad 300, or the yellow clay coating portion 430 may be formed only on the inner surface of the flame suppression pad 300.

In this way, by the configuration according to each embodiment of the present disclosure described above, it is possible to prevent a flame generated in one battery cell 100 from spreading to another neighboring battery cell 100 or battery module 10.

In addition, the thermal runaway phenomenon may be prevented by preventing a chain reaction of flames due to flame propagation.

Meanwhile, the battery pack 20 described later may include a pack case 21, and the pack case 21 may include an upper pack case 22, and a preset space may be formed between the upper pack case 22 and the upper module case 210.

In addition, flame generated from any battery cell 100 may be discharged in a preset direction through the space between the upper pack case 22 and the upper module case 210.

Accordingly, the battery module 10 according to an embodiment of the present disclosure has the effect of enabling directional venting that may discharge flame in a direction intended by the designer.

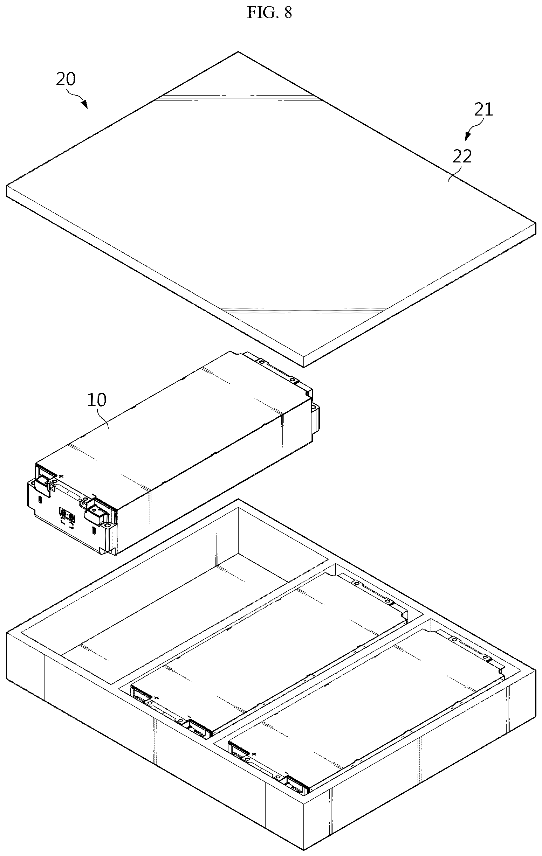

FIG. 8 is a diagram schematically illustrating the configuration of a battery pack including a battery module according to each embodiment of the present disclosure.

Referring to FIG. 8, a battery pack 20 according to an embodiment of the present disclosure may include one or more battery modules 10 according to the each embodiment of the present disclosure described above.

In addition, the battery pack 20 may further include a pack case 21 for storing the battery module 10, and various devices for controlling charging and discharging of the battery cell 100 included in the battery module 10, such as a BMS, a current sensor, and a fuse.

Here, the pack case 21 stores the battery module 10 that accommodates a plurality of battery cells 100. The pack case 21 may be configured to include, for example, an upper frame, a side frame, a partition frame, and a lower frame.

In addition, it may include a control module configured to control charging and discharging of the battery cell 100. This control module may include, for example, a battery management system (BMS) and a battery blocking unit.

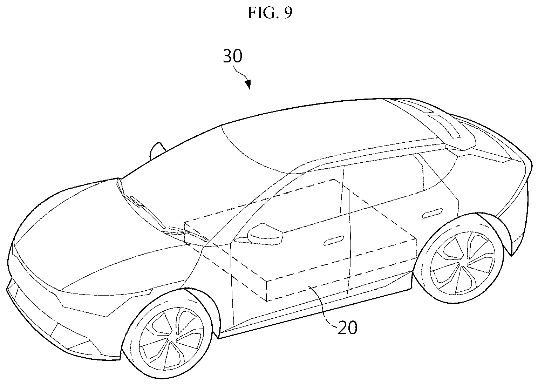

FIG. 9 is a diagram illustrating a vehicle including the battery pack in FIG. 8.

Referring to FIG. 9, a vehicle 30 according to an embodiment of the present disclosure may include the battery pack 20 according to each embodiment of the present disclosure described above. Here, the battery pack 20 may include one or more battery modules 10 according to the respective embodiments of the present disclosure described above.

Alternatively, the vehicle 30 according to an embodiment of the present disclosure may include the battery module 10 according to each embodiment of the present disclosure described above.

Here, the vehicle 30 may include various vehicles designed to use electricity, such as an electric vehicle or a hybrid electric vehicle.

Meanwhile, in another embodiment, the battery pack 20 may include, excluding the module case 200 of the battery module 10, a plurality of battery cells 100, a pack case 21 for storing the plurality of battery cells 100, and a flame suppression pad 300 disposed between the plurality of battery cells 100 inside the pack case 21.

Here, the flame suppression pad 300 is coated with an insulating member 400 or configured to contain the insulating member 400 therein.

However, in the case where a plurality of battery cells 100 are directly stored in the pack case 21 without the module case 200 of the battery module 10 and where the flame suppression pad 300 according to an embodiment of the present disclosure is disposed between the plurality of battery cells 100 inside the pack case 21, the pack case 21 may perform similar functions to those of the module case 200, and the flame suppression pad 300 may also have the same function, operation, and effect, so the detailed descriptions of the battery cell 100, the pack case 21, and the flame suppression pad 300 made above will be applied thereto.

In addition, if the module case 200 of the battery module 10 is removed, the battery cells 100 may be directly stored in the pack case 21 of the battery pack 20.

Here, a cell cover may be provided to support the battery cells 100 so that the battery cells 100 may be directly stored in the pack case 21. The cell cover may have various shapes, and for example, may be configured in an "n" shape, a "u" shape, or a " 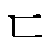 " shape surrounding three sides of at least one battery cell 100. However, it is not limited thereto.

According to the configuration above, since the battery cell 100 may be further stored in the space occupied by the module case 200 of the battery module 10 inside the battery pack 20, there is the effect of increasing the space efficiency and improving the battery capacity.

Meanwhile, the vehicle 30 according to another embodiment of the present disclosure may include one or more battery packs 20 described above, i.e., the battery packs 20 in which the battery cells 100 are directly stored in the pack case 21, excluding the module case 200 of the battery module 10.

Here, the vehicle 30 may include various vehicles designed to use electricity, such as an electric vehicle or a hybrid vehicle.

Although terms indicating directions such as up, down, left, and right are used in this specification, it is obvious to those skilled in the art to which the present disclosure pertains that these terms are only for convenience of explanation with reference the relevant drawings and may vary depending on the position of the target object or the position of the observer.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains. Therefore, the previously disclosed embodiments should be considered as those intended to describe the present disclosure, instead of those intended to limit the present disclosure. That is, the true scope of the technical idea of the present disclosure is shown in the claims, and all differences within the scope equivalent thereto should be construed as being included in the present disclosure.

### INDUSTRIAL APPLICABILITY

The present disclosure relates to a battery module, a battery pack, and a vehicle, and is particularly applicable to industries related to secondary batteries.

## Claims

1. A battery module comprising:
a plurality of battery cells;
a module case in which the plurality of battery cells are accommodated; and
a flame suppression pad disposed between the plurality of battery cells inside the module case,
wherein the flame suppression pad is coated with an insulating member or contains an insulating member therein.

2. The battery module according to claim 1,
wherein the insulating member contains an air layer or moisture and is inserted into the flame suppression pad.

3. The battery module according to claim 2,
wherein the insulating member is manufactured in a circular or polygonal shape and inserted into the flame suppression pad.

4. The battery module according to claim 1,
wherein the insulating member is provided in plurality, and
wherein the plurality of insulating members are distributed throughout an entire inside of the flame suppression pad.

5. The battery module according to claim 4,
wherein the plurality of insulating members are arranged to be distributed at a preset interval.

6. The battery module according to claim 1,
wherein the insulating member is made of yellow clay.

7. The battery module according to claim 6,
wherein the insulating member is a yellow clay ball made into a ball shape by the yellow clay and inserted into the flame suppression pad.

8. The battery module according to claim 7,
wherein the yellow clay ball is made to contain an air layer and moisture together therein.

9. The battery module according to claim 6,
wherein the flame suppression pad has a surface including a yellow clay coating portion coated with the yellow clay.

10. The battery module according to claim 1,
wherein the insulating member is made of vermiculite.

11. The battery module according to claim 1,
wherein the flame suppression pad has a surface coated with vermiculite.

12. The battery module according to claim 1,
wherein the insulating member includes a yellow clay plate coated with fire-resistant paint.

13. The battery module according to claim 12,
wherein the yellow clay plate is provided in plurality, and
wherein the plurality of yellow clay plates are arranged vertically inside the flame suppression pad.

14. A battery pack comprising the battery module according to any one of claims 1 to 13.

15. A vehicle comprising the battery module according to any one of claims 1 to 13.

16. A battery pack comprising:
a plurality of battery cells;
a pack case in which the plurality of battery cells are accommodated; and
a flame suppression pad disposed between the plurality of battery cells inside the pack case,
wherein the flame suppression pad is coated with an insulating member or contains an insulating member therein.

17. A vehicle comprising the battery pack according to claim 16.
